# EUROPÄISCHE PATENTSCHRIFT

(11) **EP 4 057 826 B1**
(45) Veröffentlichungstag und Bekanntmachung des Hinweises auf die Patenterteilung: **03.07.2024**
(21) Anmeldenummer: 20841680.0
(22) Anmeldetag: 17.12.2020
(51) Int. Cl.: A23J 1/00, A23K 10/20

(54) **VERFAHREN ZUR HERSTELLUNG VON PROTEINMASSE**
METHOD FOR PRODUCING PROTEIN MASS
PROCÉDÉ DE PRODUCTION DE MASSE PROTÉINIQUE

(30) Priorität: 17.12.2019 DE 102019219928
(43) Veröffentlichungstag der Anmeldung: 21.09.2022
(73) Patentinhaber: Deutsches Institut für Lebensmitteltechnik e.V., 49610 Quakenbrück (DE)
(72) Erfinder: PARNIAKOV, Oleksii, 49610 Quakenbrück (DE)
(74) Vertreter: Taruttis, Stefan Georg
(86) Internationale Anmeldenummer: PCT/EP2020/086905
(87) Internationale Veröffentlichungsnummer: WO 2021/123077

(56) Entgegenhaltungen:
- EP-A1- 3 662 760
- WO-A1-2017/066880
- WO-A1-2020/011903
- DE-A1-102012 201 822
- DE-A1-102020 002 938

## Beschreibung

Die vorliegende Erfindung betrifft ein Verfahren zur Herstellung von Proteinmasse aus Insektenlarven, die bevorzugt auf pflanzlichen Reststoffen gezüchtet sind. Die mit dem Verfahren erhältliche Proteinmasse ist bevorzugt bei erhöhter Temperatur zu Partikeln oder Pulver getrocknet, um als hygienischer Bestandteil für Lebensmittel oder Futtermittel verwendet zu werden.

Die Insektenlarven werden roh, d.h. ohne anfängliche Erwärmung auf eine die Proteine denaturierende Temperatur von z.B. 50°C oder höher im Verfahren eingesetzt, so dass die Insektenlarven zumindest nicht thermisch denaturiert sind.

Das Verfahren zeichnet sich dadurch aus, dass es energieeffizient durchführbar ist und eine Proteinmasse herstellt, die sensorisch akzeptabel ist.

Die DE 10 20017 210 327 A1 beschreibt das Behandeln von Obst und Gemüse mit gepulsten elektrischen Feldern, um sie für das anschließende Gefriertrocknen zu konditionieren.

Die WO 2020/011903 A1 beschreibt das Abtöten von Insektenlarven durch Erwärmen mit anschließendem Zerkleinern, Ansäuern und Fraktionieren der Masse durch Zentrifugation. Generell ist bekannt, Insektenlarven roh oder gegart als Nahrungsmittel zu verwenden.

Der Erfindung stellt sich die Aufgabe, ein alternatives Verfahren, bevorzugt ein energieeffizientes Verfahren zur Herstellung von Proteinmasse aus Insekten bereitzustellen, so dass die Proteinmasse sensorisch akzeptabel ist. Weiter bevorzugt soll das Verfahren Inhaltsstoffe der Insekten möglichst vollständig zur Verwendung als Lebensmittel oder Futtermittel herstellen.

Die Erfindung löst die Aufgabe mit den Merkmalen der Ansprüche, insbesondere mit einem Verfahren, das die Schritte
- Reinigen von Insektenlarven,
- Beaufschlagen der gereinigten Insektenlarven mit gepulsten elektrischen Feldern und Zerkleinern der Insektenlarven zur Herstellung einer Insektenmasse und
- anschließendes Fraktionieren der Insektenmasse in einen Feststoff und zumindest eine Flüssigphase
- mit anschließendem Trocknen des Feststoffs, um die Proteinmasse herzustellen
aufweist oder daraus besteht.

In einer ersten Ausführungsform werden die gereinigten Insektenlarven in Wasser suspendiert und, während sie in Wasser suspendiert sind, mit gepulsten elektrischen Feldern beaufschlagt. Im Anschluß daran werden die Insektenlarven zerkleinert, bevorzugt mit dem Schritt des Abtrennens der Insektenlaven vom Wasser vor dem Zerkleinern. In dieser Ausführungsform kann das Reinigen und das Beaufschlagen der Insektenlarven mit gepulsten elektrischen Feldern gleichzeitig erfolgen, indem Insektenlarven in Wasser suspendiert werden und in diesem Wasser mit den gepulsten elektrischen Feldern beaufschlagt werden. Anschließend werden die Insektenlarven aus dem Wasser abgetrennt und dann zerkleinert.

In einer zweiten Ausführungsform werden die Insektenlarven zunächst zerkleinert und die erhaltene Masse aus zerkleinerten Insektenlarven wird mit gepulsten elektrischen Feldern beaufschlagt. In dieser Ausführungsform werden die Insektenlarven bevorzugt von anhaftendem Wasser, das z.B. aus einer Reinigung mit Wasser stammt, getrennt. Bevorzugt werden die Insektenlarven vor dem Zerkleinern zumindest oberflächlich getrocknet, wobei der Masse aus zerkleinerten Insektenlarven kein Wasser zugesetzt wird, so dass die Masse ausschließlich aus zerkleinerten Insektenlarven bestehen kann. In der zweiten Ausführungsform kann das Verfahren aus den Schritten des Reinigens der Insektenlarven, bevorzugt Abtrennen von anhaftendem Wasser, des optionalen Einfrierens, des Zerkleinerns, des Beaufschlagens mit gepulsten elektrischen Feldern, des Fraktionierens in eine Festphase und zumindest eine Flüssigphase, und des Trocknens der Festphase bestehen, bevorzugt ohne Zugabe von Wasser zu der Masse aus zerkleinerten Insektenlarven, wobei weiter bevorzugt beim Fraktionieren aus der Flüssigphase eine wässrige Flüssigphase und eine lipidreiche Flüssigphase erzeugt werden, wobei bevorzugt aus der Flüssigphase Protein durch Abtrennen der flüssigen Bestandteile, z.B. durch Trocknen, abgetrennt wird.

Generell kann das Abtrennen von Insektenlarven von Wasser durch Abtropfenlassen der Insektenlarven auf einem Sieb erfolgen, optional mit zusätzlichem Behandeln der Insektenlarven mit warmer Luft zu deren oberflächlichen Trocknung.

In der ersten und in der zweiten Ausführungsform können die Insektenlarven als Reinigung, vor der Beaufschlagung mit gepulsten elektrischen Feldern oder vor dem Zerkleinern, zum Trocknen erhitzt werden, z.B. durch Kontaktieren mit heißer Luft, Dampf oder heißem Wasser, z.B. für eine Dauer von 10 s bis 10 min, z.B. 30 s bis 2 min, insbesondere bis zum Erreichen einer Temperatur von 50 bis 90 °C, z.B. 70 °C. Der Trocknungsschritt wird generell mit unzerkleinerten Insektenlarven durchgeführt. Dabei ist die Temperatur z.B. die mittlere Temperatur einer Masse, die durch Zerkleinern der erhitzten Insektenlarven erzeugt ist, oder die Kerntemperatur der erhitzten Insekten. Das Trocknen der Insektenlarven durch Erhitzen kann z.B. durch Behandeln mit Warmluft von 50 bis 90 °C, z.B. 70 bis 90 °C, bevorzugt mit einer Strömungsgeschwindigkeit der Warmluft von maximal 5 m/s, bevorzugt 1 bis 3 m/s, insbesondere 2 m/s erfolgen.

Das Beaufschlagen mit gepulsten elektrischen Feldern erfolgt kontinuierlich durch Bewegen der Insektenlarven, die in der ersten Ausführungsform als in Wasser suspendierte Insektenlarven vorliegen bzw. in der zweiten Ausführungsform als Masse aus zerkleinerten Insektenlarven, zwischen zumindest zwei Elektroden, die mit elektrischen Pulsen beaufschlagt werden und zwischen sich gepulste elektrische Felder erzeugen. Die gepulsten elektrischen Felder weisen z.B. 0,01 bis 10 kV/cm und einen Energieeintrag von 0,01 bis 30 kJ/kg Insektenlarven auf. Die Pulsdauer liegt z.B. bei 5 bis 50 µs, die Frequenz der Pulse bei 1 bis 500 Hz, z.B. bis 5 Hz oder bis 10 Hz. Die Insektenlarven können z.B. mit einer Geschwindigkeit von 0 bis 5 m/s, z.B. zumindest 1 m/s bis 5 oder bis 4 m/s zwischen den Elektroden bewegt werden.

Das Fraktionieren in eine wässrige Flüssigphase und eine lipidreiche Flüssigphase kann mittels einer Spindelpresse, einer Filterpresse oder eines Dekanters erfolgen. Bevorzugt erfolgt das Fraktionieren mittels einer Spindelpresse bei einem Druck von zumindest 4 MPa, z.B. zumindest 5 MPa, um einen Feststoff mit geringem Gehalt an Wasser und Lipiden zu erhalten. Beim Fraktionieren der Insektenmasse, z.B. mittels einer Spindelpresse, kann die Temperatur der Insektenmasse während des Fraktionierens etwa gleichbleiben, z.B. bei 5 bis 30°C oder bis 25 °C, oder durch das Fraktionieren erhöht werden, z.B. von 5 bis 30°C auf ca. 110 bis 120°C bei einem Pressdruck von 5 MPa, insbesondere bei Fraktionieren mittels einer Spindelpresse.

Das Verfahren hat den Vorteil, dass der durch das Fraktionieren erzeugte Feststoff einen geringen Wassergehalt aufweist und dass das Trocknen effizient erfolgt. Es hat sich gezeigt, dass das Beaufschlagen der Insektenlarven in der ersten und in der zweiten Ausführungsform mit gepulsten elektrischen Feldern das Trocknen des aus der Fraktionierung erhaltenen Feststoffs signifikant beschleunigt, insbesondere bei der Heißlufttrocknung.

Generell kann das Zerkleinern in der ersten Ausführungsform durch das Fraktionieren erfolgen, z.B. durch das Pressen, insbesondere mittels einer Spindelpresse. In dieser Variante erfolgt das Zerkleinern der mit gepulsten elektrischen Feldern behandelten Insektenlarven und das anschließende Fraktionieren in einem gemeinsamen Schritt, z.B. mittels eines Extruder oder einer Presse.

Das Zerkleinern kann z.B. durch Kuttern, Homogenisieren durch Beaufschlagen mit Druck und anschließendes Entspannen durch eine Düse, z.B. durch Extrudieren oder durch Mahlen mittels einer Mühle erfolgen.

Generell bevorzugt sind die im Verfahren eingesetzten Insektenlarven lebende, die überdies nicht eingefroren sind oder waren. Optional können die Insektenlarven vor oder nach dem Reinigen eingefroren sein, z.B. bei -18°C bis -60°C, wobei sie z.B. in der ersten Ausführungsform durch das Suspendieren in Wasser, z.B. von 4 bis 25 °C, aufgetaut werden oder in der zweiten Ausführungsform aufgetaut werden, z.B. in Luft, z.B. Luft von 4 bis 25°C, bevorzugt ohne Zusatz von Wasser, und zerkleinert werden, oder im gefrorenen Zustand zerkleinert werden.

Das Trocknen des durch das Fraktionieren erhaltenen Feststoffs erfolgt bevorzugt bei zumindest 50°C, bevorzugter bei zumindest 60°C, bevorzugter zumindest 70°C oder zumindest 80°C, z.B. bei maximal 120°C oder maximal 110°C oder maximal 100°C oder maximal 90°C. Bevorzugt erfolgt das Trocknen durch Warmlufttrocknung, z.B. Sprühtrocknen oder Wirbelschichttrocknung.

Vor dem Trocknen kann der Feststoff granuliert werden, z.B. durch Extrusion durch eine Lochblende.

Die Flüssigphase kann während des Fraktionierens oder in einem anschließenden weiteren Fraktionierschritt in eine wässrige Phase und eine lipidreiche Phase, auch als Lipidphase bezeichnet, aufgetrennt werden. Bevorzugt wird aus der wässrigen Phase anschließend darin enthaltenes Protein abgetrennt, z.B. durch Trocknen der wässrigen Flüssigphase, z.B. mittels eines Membrantrennverfahrens, durch Ausfällen des Proteins und/oder durch Trocknen, bevorzugt bei zumindest 70°C. Das aus der wässrigen Flüssigphase abgetrennte Protein kann der Festphase zugegeben werden und mit dieser getrocknet werden, oder separat getrocknet werden.

Die Lipidphase kann optional gebleicht und/oder hydriert werden und z.B. als Bestandteil für Lebensmittel oder Futtermittel verwendet werden.

Insektenlarven sind z.B. solche von *Hermetia illucens, Tenebrio molitor, Alphitobius diaperinus, Zophobas atratus morio, Galleria mellonella, Achroia grisella, Musca domestica, Bombyx mori, Apis mellifera, Acheta domesticus, Gryllodes sigillatus, Locusta migratoria, Schistocerca americana gregaria, Dactylopius coccus* oder *Periplaneta americana.*

Weiterhin wird die mit dem Verfahren erhältliche getrocknete Proteinmasse, die Flüssigphase, bevorzugt die aus der Flüssigphase abgetrennte Lipidphase und das aus der wässrigen Flüssigphase abgetrennte Protein beschrieben, wobei bevorzugt die aus der Festphase getrocknete Proteinmasse mit dem aus der wässrigen Phase abgetrennten Protein vereinigt ist, insbesondere gemeinsam getrocknet ist. Die getrocknete Proteinmasse ist aus gereinigten Insektenlarven hergestellt, die mit gepulsten elektrischen Feldern beaufschlagt und zu einer Insektenmasse zerkleinert und anschließend zu einem Feststoff und einer wässrigen Flüssigphase fraktioniert wurden, mit Abtrennen von Protein aus der wässrigen Flüssigphase und Trocknen der Festphase und des aus der wässrigen Flüssigphase abgetrennten Proteins. Optional wird der Feststoff mit dem aus der wässrigen Flüssigphase abgetrennten Protein vereinigt und anschließend getrocknet. Dabei ist die Festphase mit dem Protein vereinigt, das aus der wässrigen Flüssigphase abgetrennt ist, und diese werden zusammen getrocknet.

Bevorzugt wird das Öl in der Insektenmasse enthaltene Öl als separate lipidreiche Flüssigphase bereitgestellt, die aus der Insektenmasse abgetrennt ist, z.B. direkt aus der Insektenmasse mittels eines 3-Phasen-Dekanters oder aus einer Flüssigphase durch Separieren in eine wässrige Flüssigphase und eine lipidreiche Flüssigphase. Dabei ist das Öl separat von Protein, z.B. als eine aus der Insektenmasse separierte lipidreiche Flüssigphase, aus der optional Wasser entfernt ist.

Die Erfindung wird nun genauer anhand von Beispielen mit Bezug auf die Figuren beschrieben, die in
- Fig. 1 schematisch das Verfahren in der ersten Ausführungsform,
- Fig. 2 schematisch das Verfahren in der zweiten Ausführungsform,
- Fig. 3 das Trocknungsverhalten einer beispielhaften Proteinmasse zeigen.

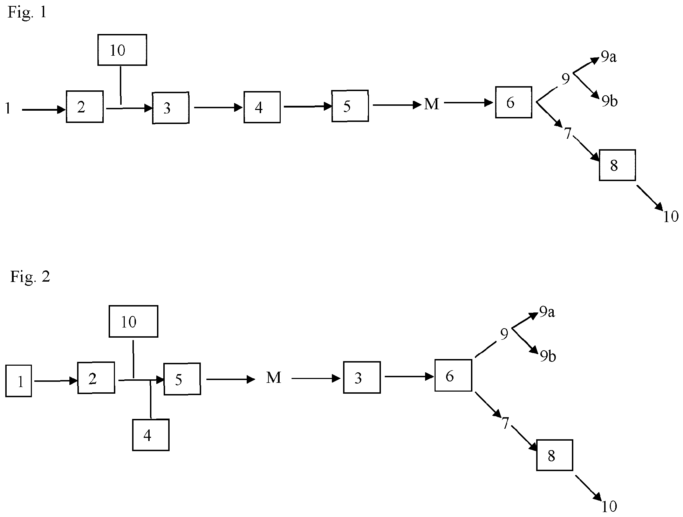

Die Figur 1 zeigt schematisch die erste Ausführungsform des Verfahrens, bei der Insektenlarven 1 einer Reinigung 2 unterzogen werden, optional mit Einfrieren 10, und in Wasser suspendiert mit gepulsten elektrischen Feldern (PEF) 3 behandelt werden. Dabei kann nach dem Einfrieren 10 das Auftauen während des Suspendierens in Wasser und der Behandlung mit gepulsten elektrischen Feldern 3 erfolgen. Die mit PEF 3 behandelten und in Wasser suspendierten Insektenlarven werden aus dem Wasser abgetrennt 4 und einer Zerkleinerung 5 zu einer Insektenmasse M unterzogen, anschließend einer Fraktionierung 6 in eine Festphase 7 und in eine Flüssigphase 9, bevorzugt in einem Fraktionierungsschritt direkt oder in einer anschließenden weiteren Fraktionierung in eine wässrige Flüssigphase 9a und eine Lipidphase 9b. Aus der Festphase 7 wird durch Trocknen 8 die Proteinmasse 10.

Die Figur 2 zeigt schematisch die zweite Ausführungsform des Verfahrens, bei der Insektenlarven 1 nach einer Reinigung 2 und optional Einfrieren 10 einer Zerkleinerung 5 unterzogen werden und die so erzeugte Insektenmasse M anschließend der Behandlung mit gepulsten elektrischen Feldern 3. Bevorzugt werden die Insektenlarven nach dem Reinigen 2 und vor oder nach dem optionalen Einfrieren 10 von Wasser abgetrennt 4, mit dem sie beim Reinigen 2 in Kontakt gebracht wurden. Die Insektenmasse wird nach der Behandlung mit PEF 3 dem Fraktionieren 6 in eine Flüssigphase 9, bevorzugt direkt in eine Lipidphase 9b und eine wässrige Flüssigphase 9a, und eine Festphase 7 unterzogen, aus der anschließend durch Trocknen 8 die Proteinmasse 10 hergestellt wird.

In beiden Ausführungsformen kann das Abtrennen 4 von Wasser von den Insektenlarven durch Sieben erfolgen, bevorzugt mit anschließendem Heißlufttrocknen, z.B. mit Luft einer Temperatur von 50 bis 90°C, insbesondere bei 50, 60, 70, 80 oder 90°C, z.B. in einem Luftstrom einer Geschwindigkeit von durchschnittlich 1 bis 3 m/s, insbesondere 2 m/s.

### Beispiel 1: Herstellung getrockneter Proteinmasse aus Larven von Hermetia illucens

Als Beispiel für Insektenlarven wurde ca. 1 kg frische, lebende Larven von *Hermetia illucens* in kaltem Leitungswasser suspendiert und nach einer Standzeit von ca. 5 bis 30 min bei leichtem Rühren mittels eines groben Siebblechs aus dem Wasser abgetrennt. Die Larven wurden anschließend erneut in kaltem Leitungswasser suspendiert und zwischen zwei Elektroden mit gepulsten elektrischen Feldern ab zumindest 1 kV/cm, Pulsdauer ab zumindest 5 µs, Pulsfrequenz von 1 bis 500 Hz, Pulsenergie 5 bis 20 kJ/kg Larven beaufschlagt.

Anschließend wurden die Larven mittels des groben Siebblechs aus dem Wasser abgetrennt und im Luftstrom von 80 °C, 2 m/s getrocknet. Dabei wurden 0,65 kg Wasser von den Larven abgetrennt. Anschließen wurden diese Larven in einem Schritt mittels einer Spindelpresse bei einem Druck von 4 bis 5 MPa zu einer Insektenmasse zerkleinert und in eine Festphase und eine Flüssigphase fraktioniert. Die Festphase wies einen hohen Gehalt an Protein auf, Chitin, Kohlenhydrate sowie Spuren von Öl und Wasser. Die Flüssigphase wies neben Wasser mit darin gelöstem Protein auch Lipide auf, die mittels eines Dekanters von der wässrigen Phase getrennt werden konnten. Die Festphase wurde durch Heißlufttrocknen mit einem Luftstrom ab 2 m/s von 50°C bis 90 °C getrocknet.

Die Zusammensetzung des mit dem erfindungsgemäßen Verfahren hergestellten Feststoffs (mit PEF) und der Flüssigphase (mit PEF) und eines Feststoffs bzw. einer Flüssigphase, die zum Vergleich ohne Behandlung mit gepulsten elektrischen Feldern (Vergleich, ohne PEF) mit den ansonsten identischen Verfahrensschritten hergestellt wurde, ist in der Tabelle dargestellt.

| | Feststoff mit PEF | Flüssigphase mit PEF | Feststoff Vergleich, ohne PEF | Flüssigphase Vergleich, ohne PEF |
|---|---|---|---|---|
| Masse | 0,22 kg | 0,13 kg | 0,23 kg | 0,12 kg |
| Protein | 65,3 % | 1 - 2 % | 59,3% | 1 - 2 % |
| Andere Feststoffe | 17 % | | 17 % | |
| Öl | 16,7 % | 96,4 % | 18,5 % | 96,9 % |
| Wasser | | 2 - 3 % | | 2 -3 % |

Dieses Ergebnis zeigt, dass mit dem erfindungsgemäßen Verfahren durch die PEF-Behandlung ein Feststoff mit höherem Proteingehalt und eine größere Flüssigphase hergestellt werden kann.

### Beispiel 2: Herstellung getrockneter Proteinmasse aus Larven von Hermetia illucens

Als Beispiel für Insektenlarven wurde ca. 1 kg frische, lebende Larven von *Hermetia illucens* bei - 18 °C eingefroren und nach 10 d in 15°C Leitungswasser suspendiert und darin aufgetaut und sofort mit gepulsten elektrischen Feldern ab zumindest 1 kV/cm, Pulsdauer ab zumindest 5 µs, Pulsfrequenz von 1 bis 500 Hz, Pulsenergie 5 bis 20 kJ/kg Larven beaufschlagt. Die Larven wurden mit einem Lochblech vom Wasser abgetrennt und bei einer Temperatur von ca. 20 °C mittels einer Spindelpresse bei 5 MPa Pressdruck in einem Schritt zerkleinert und fraktioniert. Die erhaltenen Fraktionen hatten eine Temperatur von ca. 110 bis 120 °C. Zum Vergleich wurde dasselbe Verfahren, jedoch ohne Beaufschlagen der Elektroden mit elektrischer Spannung, durchgeführt (Vergleich, ohne PEF). Die Zusammensetzungen des jeweiligen Feststoffs und der Flüssigphase sind in der Tabelle dargestellt.

| | Feststoff mit PEF | Flüssigphase mit PEF | Feststoff Vergleich, ohne PEF | Flüssigphase Vergleich, ohne PEF |
|---|---|---|---|---|
| Masse | 0,22 kg | 0,22 kg | 0,79 kg | 0,176 kg |
| Protein | 16% | geringer Gehalt, nicht bestimmt | 15% | geringer Gehalt, nicht bestimmt |
| Andere Feststoffe | 19% | | 15 % | |
| Öl | 7 % | 12 % | 7 % | 17 % |
| Wasser | 54,57 % | 86,7 % | 59,9 % | 75,7 % |

Dieses Ergebnis zeigt, dass die Behandlung mit gepulsten elektrischen Feldern zu einer höheren Ausbeute an Protein in dem Feststoff führt.

### Beispiel 3: Herstellung getrockneter Proteinmasse aus Larven von Hermetia illucens

Als Beispiel für Insektenlarven wurde ca. 1 kg frische, lebende Larven von *Hermetia illucens* zum Waschen in kaltem Leitungswasser suspendiert und daraus mittels eines Lochblechs abgetrennt, erneut in kaltem Leitungswasser suspendiert und mit gepulsten elektrischen Feldern ab 1 kV/cm, Pulsdauer ab 5 µs, Pulsfrequenz von 1 bis 500 Hz Larven beaufschlagt.

Die Larven wurden anschließend mit einem Lochblech vom Wasser abgetrennt. Die Larven wurden mit dem anhaftenden Wasser mittels eines Kutters, Fleischwolfs oder einer Hammermühle zerkleinert und die erhaltenen Insektenmasse wurde mittels einer Spindelpresse, alternativ mittels eines 3-Phasen-Trenndekanters, bei einem Druck von 5 MPa direkt in drei Phasen fraktioniert, um mit diesem einen Schritt eine lipidreiche Flüssigphase (Ölphase), eine wässrige Flüssigphase und einen Feststoff zu erhalten.

Die Zusammensetzungen des jeweiligen Feststoffs und der Flüssigphasen sind in der Tabelle dargestellt.

| | Feststoff mit PEF | Ölphase mit PEF | Wässrige Flüssigphase mit PEF | Feststoff Vergleich, ohne PEF | Ölphase Vergleich ohne PEF | Flüssigphase Vergleich, ohne PEF |
|---|---|---|---|---|---|---|
| Masse | 0,21 kg | 0,14 kg | 0,65 kg | 0,25 kg | 0,12 kg | 0,63 kg |
| Protein | 40% | 2% | 7% | 46% | 3% | 2% |
| Andere Feststoffe | 49% | 2% | geringer Gehalt, nicht bestimmt | 38% | 2% | geringer Gehalt, nicht bestimmt |
| Öl | 3% | 93% | geringer Gehalt, nicht bestimmt | 10% | 93% | geringer Gehalt, nicht bestimmt |
| Wasser | 8% | 3% | 93% | 6% | 2% | 98% |

Dieses Ergebnis zeigt, dass die Behandlung mit gepulsten elektrischen Feldern zu einer hohen Ausbeute an Protein und geringerem Ölgehalt in dem Feststoff, einer hohen Ausbeute an Protein in der wässrigen Flüssigphase sowie einer hohen Ausbeute an Öl in der separierten flüssigen Ölphase führt. Entsprechend ist generell bevorzugt, aus der wässrigen Flüssigphase das Protein zu isolieren.

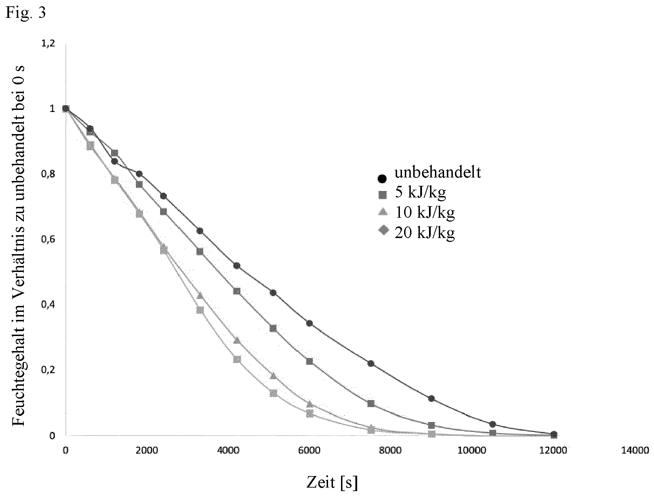

Die Figur 3 zeigt das relative Trocknungsverhalten der Festphasen, die mit dem Verfahren bei einer Beaufschlagung der Larven mit gepulsten elektrischen Feldern (PEF) mit 5 kJ/kg Larven, 10 kJ/kg Larven bzw. 20 kJ/kg Larven erzeugt wurde, im Verhältnis zu einer zu Beginn der Trocknung (0 s) eingesetzten Festphase, die mit denselben Verfahrensschritten jedoch ohne die Beaufschlagung mit gepulsten elektrischen Feldern (unbehandelt) hergestellt wurde.

Dieses Ergebnis zeigt, dass die Beaufschlagung mit gepulsten elektrischen Feldern die Trocknungsdauer signifikant verkürzt. Weiter wurde festgestellt, dass im Vergleich zu dem Verfahren ohne PEF die Beaufschlagung mit gepulsten elektrischen Feldern zu einer um 10 Vol.-% höheren Abtrennung von Lipiden, die in der Flüssigphase enthalten sind, aus der Insektenmasse führt.

## Patentansprüche

1. Verfahren zur Herstellung von Proteinmasse aus Insektenlarven mit Reinigen von Insektenlarven, Beaufschlagen der Insektenlarven mit gepulsten elektrischen Feldern und Zerkleinern der Insektenlarven zur Herstellung einer Insektenmasse und anschließendem Fraktionieren der Insektenmasse in einen Feststoff und zumindest eine Flüssigphase, mit anschließendem Trocknen des Feststoffs, um die Proteinmasse herzustellen.

2. Verfahren nach Anspruch 1, **dadurch gekennzeichnet, dass** die Insektenlarven in Wasser suspendiert werden und in Wasser suspendiert mit gepulsten elektrischen Feldern beaufschlagt werden.

3. Verfahren nach Anspruch 1, **dadurch gekennzeichnet, dass** die Insektenlarven zerkleinert werden und eine Masse aus zerkleinerten Insektenlarven mit gepulsten elektrischen Feldern beaufschlagt wird.

4. Verfahren nach einem der voranstehenden Ansprüche, **dadurch gekennzeichnet, dass** das Reinigen und das Beaufschlagen mit gepulsten elektrischen Feldern durch Suspendieren der Insektenlarven in Wasser und Beaufschlagen der in Wasser suspendierten Insektenlarven mit gepulsten elektrischen Feldern und anschließendem Abtrennen der Insektenlarven aus dem Wasser erfolgt und die Insektenlarven anschließend zerkleinert werden.

5. Verfahren nach einem der voranstehenden Ansprüche, **dadurch gekennzeichnet, dass** die Insektenlarven vor dem Zerkleinern zumindest oberflächlich getrocknet werden und dass der Masse aus zerkleinerten Insektenlarven kein Wasser zugesetzt wird.

6. Verfahren nach einem der voranstehenden Ansprüche, **dadurch gekennzeichnet, dass** beim Fraktionieren eine wässrige Flüssigphase und eine lipidreiche Flüssigphase erzeugt werden.

7. Verfahren nach einem der voranstehenden Ansprüche, **dadurch gekennzeichnet, dass** das Fraktionieren mittels einer Presse mit zumindest 4 MPa oder zumindest 5 MPa Druck oder mittels eines Dekanters erfolgt.

8. Verfahren nach einem der voranstehenden Ansprüche, **dadurch gekennzeichnet, dass** das Fraktionieren mittels einer Presse erfolgt, die eine Spindelpresse oder Filterpresse ist.

9. Verfahren nach einem der voranstehenden Ansprüche, **dadurch gekennzeichnet, dass** das Zerkleinern mittels eines Kutters, einer Mühle, eines Extruders oder einer Presse erfolgt.

10. Verfahren nach einem der voranstehenden Ansprüche, **dadurch gekennzeichnet, dass** die Insektenlaven vor der Beaufschlagung mit gepulsten elektrischen Feldern oder vor dem Zerkleinern durch Kontaktieren mit heißer Luft, Dampf oder heißem Wasser für eine Dauer von 10 s bis 10 min auf eine Temperatur von 50 °C bis 90 °C erhitzt werden.

11. Verfahren nach einem der voranstehenden Ansprüche, **dadurch gekennzeichnet, dass** die Insektenlarven vor oder nach dem Reinigen bei -18°C bis -60°C eingefroren werden und aufgetaut werden.

12. Verfahren nach einem der voranstehenden Ansprüche, **dadurch gekennzeichnet, dass** das Trocknen des Feststoffs bei zumindest 70°C erfolgt.

13. Verfahren nach einem der Ansprüche 6 bis 12, **dadurch gekennzeichnet, dass** aus der wässrigen Flüssigphase Protein abgetrennt wird und der Proteinmasse zugesetzt wird.

14. Verfahren nach einem der voranstehenden Ansprüche, **dadurch gekennzeichnet, dass** die Insektenlarven roh sind.

## Claims

1. Process for producing protein mass from insect larvae comprising cleaning insect larvae, subjecting the insect larvae to pulsed electric fields and comminuting the insect larvae to produce an insect mass and subsequently fractionating the insect mass into a solid and at least one liquid phase, followed by drying the solid to produce the protein mass.

2. Process according to claim 1, **characterised in that** the insect larvae are suspended in water and are exposed to pulsed electric fields while suspended in water.

3. Process according to claim 1, **characterised in that** the insect larvae are crushed and a mass of crushed insect larvae is subjected to pulsed electric fields.

4. Process according to one of the preceding claims, **characterised in that** the cleaning and subjecting to pulsed electric fields is carried out by suspending the insect larvae in water and subjecting the insect larvae suspended in water to pulsed electric fields and subsequently separating the insect larvae from the water, and the insect larvae are then crushed.

5. Process according to one of the preceding claims, **characterised in that** the insect larvae are at least superficially dried before crushing and **in that** no water is added to the mass of crushed insect larvae.

6. Process according to one of the preceding claims, **characterised in that** an aqueous liquid phase and a lipid-rich liquid phase are produced during fractionation.

7. Process according to one of the preceding claims, **characterised in that** the fractionation is carried out by means of a press with at least 4 MPa or at least 5 MPa pressure or by means of a decanter.

8. Process according to one of the preceding claims, **characterised in that** the fractionation is carried out by means of a press which is a screw press or a filter press.

9. Process according to one of the preceding claims, **characterised in that** the crushing is carried out by means of a cutter, a mill, an extruder or a press.

10. Process according to one of the preceding claims, **characterised in that** the insect larvae are heated to a temperature of 50 °C to 90 °C by contact with hot air, steam or hot water for a period of 10 s to 10 min before being subjected to pulsed electric fields or before being crushed.

11. Process according to one of the preceding claims, **characterised in that** the insect larvae are frozen at -18°C to -60°C before or after cleaning and are thawed.

12. Process according to one of the preceding claims, **characterised in that** the drying of the solid takes place at at least 70°C.

13. Process according to one of claims 6 to 12, **characterised in that** protein is separated from the aqueous liquid phase and is added to the protein mass.

14. Process according to one of the preceding claims, **characterised in that** the insect larvae are raw.

## Revendications

1. Procédé de production d'une masse de protéines à partir de larves d'insectes, comprenant le nettoyage des larves d'insectes, l'exposition des larves d'insectes à des champs électriques pulsés et le broyage des larves d'insectes pour produire une masse d'insectes, puis le fractionnement de la masse d'insectes en une matière solide et au moins une phase liquide, suivi du séchage de la matière solide pour produire la masse de protéines.

2. Procédé selon la revendication 1, **caractérisé en ce que** les larves d'insectes sont mises en suspension dans l'eau et, en suspension dans l'eau, sont soumises à des champs électriques pulsés.

3. Procédé selon la revendication 1, **caractérisé en ce que** les larves d'insectes sont broyées et qu'une masse de larves d'insectes broyées est soumise à des champs électriques pulsés.

4. Procédé selon l'une des revendications précédentes, **caractérisé en ce que** le nettoyage et l'exposition à des champs électriques pulsés sont réalisés en mettant en suspension les larves d'insectes dans l'eau et en exposant les larves d'insectes en suspension dans l'eau à des champs électriques pulsés, puis en séparant les larves d'insectes de l'eau et en broyant ensuite les larves d'insectes.

5. Procédé selon l'une des revendications précédentes, **caractérisé en ce que** les larves d'insectes sont séchées au moins superficiellement avant d'être broyées et **en ce qu'**aucune eau n'est ajoutée à la masse de larves d'insectes broyées.

6. Procédé selon l'une quelconque des revendications précédentes, **caractérisé en ce que**, lors du fractionnement, une phase liquide aqueuse et une phase liquide riche en lipides sont produites.

7. Procédé selon l'une quelconque des revendications précédentes, **caractérisé en ce que** le fractionnement est effectué au moyen d'une presse ayant une pression d'au moins 4 MPa ou d'au moins 5 MPa, ou au moyen d'un décanteur.

8. Procédé selon l'une quelconque des revendications précédentes, **caractérisé en ce que** le fractionnement est effectué au moyen d'une presse, qui est une presse à vis ou une presse à filtre.

9. Procédé selon l'une quelconque des revendications précédentes, **caractérisé en ce que** le broyage est effectué au moyen d'un cutter, d'un broyeur, d'une extrudeuse ou d'une presse.

10. Procédé selon l'une des revendications précédentes, **caractérisé en ce que** les larves d'insectes sont chauffées à une température de 50 °C à 90 °C par mise en contact avec de l'air chaud, de la vapeur ou de l'eau chaude pendant une durée de 10 s à 10 min avant d'être soumises à des champs électriques pulsés ou avant d'être broyées.

11. Procédé selon l'une quelconque des revendications précédentes, **caractérisé en ce que** les larves d'insectes sont congelées entre -18°C et -60°C avant ou après le nettoyage et sont décongelées.

12. Procédé selon l'une quelconque des revendications précédentes, **caractérisé en ce que** le séchage de la matière solide est effectué à au moins 70°C.

13. Procédé selon l'une quelconque des revendications 6 à 12, **caractérisé en ce que** l'on sépare la protéine de la phase liquide aqueuse et on l'ajoute à la masse protéique.

14. Procédé selon l'une quelconque des revendications précédentes, **caractérisé en ce que** les larves d'insectes sont crues.
